(19) Europäisches Patentamt
European Patent Office
Office européen des brevets

(11) **EP 1 347 549 B1**

(12) **EUROPÄISCHE PATENTSCHRIFT**

(45) Veröffentlichungstag und Bekanntmachung des Hinweises auf die Patenterteilung:
**29.03.2017 Patentblatt 2017/13**

(51) Int Cl.:
*H02G 3/04* *(2006.01)*  *H02G 3/00* *(2006.01)*

(21) Anmeldenummer: **03004010.9**

(22) Anmeldetag: **24.02.2003**

(54) **Intumeszierende elektrische Installationssysteme und Verfahren zu deren Herstellung**

Intumescent electrical installation system and method for making this

Système d'installation électrique ignifuge et méthode pour sa construction

(84) Benannte Vertragsstaaten:
**AT BE BG CH CY CZ DE DK EE ES FI FR GB GR HU IE IT LI LU MC NL PT SE SI SK TR**

(30) Priorität: **19.03.2002 AT 4102002**

(43) Veröffentlichungstag der Anmeldung:
**24.09.2003 Patentblatt 2003/39**

(73) Patentinhaber: **Promat GmbH**
**4021 Linz (AT)**

(72) Erfinder:
• **Horacek, Heinrich**
**4040 Linz (AT)**
• **Pickhard, Walter**
**6020 Emmenbrücke (CH)**

(74) Vertreter: **Landgraf, Elvira et al**
**Schulfeld 26**
**4210 Gallneukirchen (AT)**

(56) Entgegenhaltungen:
DE-A- 3 139 599    DE-A- 4 234 374
GB-A- 2 186 123    US-A- 4 104 073
US-A- 4 543 281

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Elektrische Installationssysteme, wie etwa Abzweigdosen, Abzweigkästen, Schalterdosen, Panzerkästen, Durchgangsdosen u.s.w., werden aus den unterschiedlichsten Materialien, je nach Verwendungszweck, hergestellt.

Bisher eingesetzte Materialien sind Stahlblech, Aluminium, Guss, (Polyvinylchlorid (PVC), Polyphenylenether/Polyphenylenoxid (PPE/PPO), Polycarbonat (PC), Polystyrol (PS), Polypropylen (PP), Polyethylen (PE), ABS oder Polyamid (PA).

Je nach Einsatzgebiet und nationalen Bestimmungen müssen die elektrischen Installationssysteme gewissen Anforderungen betreffend Feuerbeständigkeit, Temperaturbeständigkeit, chemische Beständigkeit, elektrische Eigenschaften, wie etwa spezifischer Durchgangswiderstand, Durchschlagfestigkeit oder Kriechstromfestigkeit, u.s.w. entsprechen.

So gelten beispielsweise in Deutschland und Österreich folgende Werte für die Flammwidrigkeit von elektrischen Installationssystemen nach VDE 0471/DIN IEC 695 Teil 2-1: Elektrische Installationssysteme für den Unterputz und im Betonbau müssen eine Flammwidrigkeit von 650°C, Abdeckungen und Deckel von 750°C, Installationssysteme für die Hohlwandmontage von 850°C und Klemmen sowie Imputzabzweigdosen für Steigleitungen 1,5 und 2,5 mm$^2$ Kupferleiter von 960°C aufweisen.

Die heutzutage erhältlichen Installationssysteme aus PVC, PPE/PPO, PC, PC-Blend, PP-Blend, PA sind im Brandfall nach ÖVE-EN 50086 oder VDE 0605 selbstverlöschend und nicht flammverbreitend. Installationssysteme aus Blech oder Aluminium müssen in den USA zur brandhemmenden Ausstattung derselben mit knetbaren, intumeszierenden Kitten oder intumeszierenden Einlagen geschützt werden.

In den USA dürfen die derart geschützten Installationssysteme bei einem Brandtest gemäß ASTM E-119 die Temperatur von 181°C nicht überschreiten.

Im Brandfall, beispielsweise bei durch Kurzschlüssen ausgelösten Kabelbränden, kann es aber trotzdem durch die Bildung von gefährlichen Rauchgasen leicht zu schwerwiegenden Folgen kommen. Insbesondere bei Installationssystemen, die ihre Schwerentflammbarkeit einem Halogen, z.B. Chlor, verdanken, kommt es im Brandfall zur Abspaltung korrosiver Gase, die sich rasch ausbreiten und bleibende Brandfolgeschäden verursachen können. Um vor allem die Bildung von korrosiven Gasen zu vermeiden, wurden sogenannte HFT-Installationssysteme entwickelt, die halogenfrei, flammwidrig, d.h. selbstverlöschend und im Brandfall nicht tropfend und temperaturbeständig von -40°C bis +140°C sind. Doch auch diese Systeme können die Ausbreitung von Rauchgasen nicht verhindern.

Die GB-A-2 186 123 und DE-A1-4 234 374 offenbaren intumeszierende, elektrische Installationssysteme entsprechend dem Stand der Technik.

Aus diesem Grund war es Aufgabe der Erfindung elektrische Installationssysteme zu finden, die die Ausbreitung von Rauchgasen auf einfache Weise verhindern.

Unerwarteterweise konnte diese Aufgabe durch intumeszierende, elektrische Installationssysteme, die im Spritzgussverfahren aus Polyolefinen oder Polyimiden in Kombination mit Intumeszenzadditiven hergestellt werden, gelöst werden.

Gegenstand der Erfindung sind demnach intumeszierende, elektrische Installationssysteme, die dadurch gekennzeichnet sind, dass sie aus einer Spritzgussmasse aus Polyolefinen oder Polyimiden in Kombination mit Intumeszenzadditiven bestehen, wobei die Schmelztemperaturen der Polyolefine und der Polyimide tiefer liegen als die Intumeszenztemperatur der Intumeszenzadditive.

Unter elektrischen Installationssysteme sind Aufputzdosen und -kästen, wie etwa Abzweigdosen und Panzerkästen, Unterputzdosen und -kästen, wie etwa Geräte-oder Schalter- und Abzweigdosen, sowie Abzweigkästen, Hohlwanddosen und - kästen und Betonbau-Installationssysteme zu verstehen.

Oben angeführte Installationssysteme können dabei als Durchgangsdosen, Winkeldosen, T-Dosen, Kreuzdosen, Kombi-Abzweig-Schalterdose, Doppel-Abzweig-Schalterdose, Imputz-Abzweigdose, Deckenleuchten-Anschlussdose, Wandleuchten-Anschlussdose, Kuppeldose, Zweifach-Geräte-oder Schalterdose, Dreifach-Gerätedose, Geräteabzweigdose, Abzweig-Schalterkasten, Übergangskasten, Universalkasten, u.s.w. ausgebildet sein.

Die erfindungsgemäßen intumeszierenden, elektrischen Installationssysteme bestehen aus einer Spritzgussmasse aus Polyolefinen oder Polyimiden in Kombination mit Intumeszenzadditiven.

Als Polyolefine können thermoplastische Polyolefine wie Polyethylen (PE) mit niedriger Dichte (LDPE) bis hoher Dichte (HDPE), bevorzugt HDPE, Ethylen-Vinylacetat-(EVA)-Copolymere, Ethylen-Butylacrylat-Copolymere, Polypropylen, Polybuten-1, Poly(methylpenten), Copolymere aus Ethylen und Octen, Ethylen/Propylen-Dien-Terpolymere (EPDM) oder Gemische derselben eingesetzt werden.

Bevorzugt wird HDPE, EVA-Copolymere oder Copolymere aus Ethylen und Octen oder Gemische aus HDPE und EVA-Copolymer verwendet.

Geeignete Polyimide sind solche, die als tiefschmelzende Precursor vorliegen und bei Temperatureinwirkung durch Additionsreaktionen hochvernetzte Produkte bilden, wie beispielsweise Bismaleinimide.

Bevorzugt werden Bismaleinimide, die aus Diphenylmethan-4,4'-bismaleinimid und Methylendianilin oder anderen aromatischen Diaminen bestehen, eingesetzt.

Die eingesetzten Bismaleinimide sollten dabei einen Schmelzpunkt unter etwa 200°C aufweisen.

Am Markt erhältliche Produkte sind beispielsweise BMI B21 (DSM Fine Chemicals), Kerimide 601 (Ciba), Homide 250 (HOS Technik) u.s.w.

Als Intumeszenzadditive kommen Ammonium- oder Aminoverbindungen, wie etwa Ammoniumpolyphosphat, Ammoniumdihydrogenphosphat, Ethylendiaminphosphat, Ammoniumpentaborat, Melamin, Dicyandiamid, vollständige Phosphorsäureester mit Polyolen, Dipentaerythrit, Pentaerythrit, Zucker, Dextran, Stärke, Vermikulargraphit, Wasserglas, Blähglimmer, Vermiculit, Perlit und deren Mischungen in Betracht.

Bevorzugte Intumeszenzadditive sind Ammoniumpolyphosphat, Ethylendiaminphosphat, Melamin, Dipentaerythrit, Pentaerythrit, Natriumsilikat oder Vermikulargraphit oder Mischungen derselben.

Besonders bevorzugt wird bei Polyimiden Vermikulargraphit und bei Polyolefinen Ethylendiaminphosphat und/oder Ammoniumpolyphosphat und/oder Melamin und/oder Dipentaerythrit und/oder Vermikulargraphit als Intumeszenzadditiv zugesetzt.

Bei der erfindungsgemäßen Spritzgussmasse ist darauf zu achten, dass die Schmelztemperaturen der Polyolefine und der Polyimide tiefer liegen als die Intumeszenztemperatur der Intumeszenzadditive.

Die erfindungsgemäße Spritzgussmasse enthält dabei 20 bis 50 Gew%, bevorzugt 30 bis 40 Gew% an Polyolefin oder Polyimid und 50 bis 80 Gew%, bevorzugt 60 bis 70 Gew% an Intuemszenzadditiven.

Die erfindungsgemäße Spritzgussmasse kann gegebenenfalls noch anorganische Füllstoffe, wie etwa Kaolin, Tone, Glimmer, Wollastonit, Kalziumsilikate, Titandioxyd, Zinkborat, Quarz, Zinkoxid, Apatit, Talkum, Aluminiumphosphate, ATH, $Mg(OH)_2$, Kreide, Glasfasern, Mineralfasern u.s.w. enthalten. Bevorzugte anorganische Füllstoffe sind Tone, Glimmer und Glasfasern.

Werden Tone oder Glimmer als anorganische Füllstoffe eingesetzt, so ist bevorzugt, dass diese in der Mischung aus Polymer, Intumeszenzadditiv und Füllstoff als Nanopartikel vorliegen.

Die Menge an zugesetztem Füllstoff kann zwischen 0 und 20 Gew%, bezogen auf die gesamte Spritzgussmasse, liegen.

Zusätzlich kann die erfindungsgemäße Spritzgussmasse noch übliche Dispergatoren, wie etwa Zink- oder Kalziumstearat, Glycerinstearat, Pentaerythrittetrastearat, Cetylpalmitat, Ethylendistearoyldiamid $C_{14}$-$C_{18}$-Fettalkohole, Dicarbonsäureester, Fettamine, Paraffine, u.s.w in einer Menge von 0 bis 5 Gew% enthalten.

Zur Herstellung der Spritzgussmasse wird zuerst eine Pulvermischung oder ein Granulat aus den gewünschten Bestandteilen durch einfaches Zusammenmischen oder durch Extrusion hergestellt.

Anschließend wird das erfindungsgemäße intumeszierende elektrische Installationssystem in nur einem Arbeitsgang im Spritzgussverfahren geformt und gegebenenfalls nachgehärtet.

Die Parameter, wie etwa Temperatur, Einspritzdruck und Schließdruck, hängen dabei von dem jeweiligen Einsatzgemisch ab.

Um zu gewährleisten, dass die erfindungsgemäßen Installationssysteme im Brandfall rauchgasdicht verschließen, wird die Materialdicke so bemessen, dass sie dem Dosenvolumen, dividiert durch das Produkt aus doppelter Mantelfläche und maximalem Expansionsfaktor entspricht, sodass das Installationssystem durch Intumeszenz vollständig ausgeschäumt wird.

Diese Bedingung lässt sich wie folgt als Formel darstellen:

$$do = V/ (Mf \cdot Ef \cdot Kf)$$

do    Materialdicke
V     Volumen des Installationssystems (Dose, Verteilerkasten, u.s.w.)
Mf    Mantelfläche des Installationssystemes
Ef    maximaler Expansionsfaktor des Intumeszenzadditivs
Kf    Kompressionsfaktor (Verhältnis von max. Expansionsfaktor zu tatsächlichem Expansionsfaktor)

Bevorzugt soll ein Kompressionsfaktor von 2 vorliegen.

Die erfindungsgemäßen intumeszierenden elektrischen Installationssysteme weisen mehrere Vorteile gegenüber bisher erhältlichen Installationssystemen auf.

Erstens enthält die Spritzgussmasse keine Halogene, sodass im Brandfall keine korrosiven Gase entstehen können.

Weiters verschließen die erfindungsgemäßen Installationssysteme im Brandfall durch die Intumeszenzadditive rauchgasdicht, sodass zusätzliche Brandschutzmaßnahmen, wie intumeszierenden Einlagen oder Kitte nicht mehr erforderlich sind. Diese Vorteile werden zudem auf einfachem Wege in einem Arbeitsgang im Spritzgussverfahren erzielt. Zudem weisen die erfindungsgemäßen Installationssysteme gute mechanische Eigenschaften auf.

**Beispiel 1:** Nullversuch

Es wurde ein käuflicher Unterputz-Verbindungskasten 100 mit den Abmessungen 107 x 107 x 57 mm aus schlagfestem Polystyrol in eine entsprechende Ausnehmung in einer 100 mm Ytongwand so angebracht, dass der Deckel des Verbindungskasten eben mit der Ytongoberfläche abschließt. An der Rückseite wurde mittig ein Thermoelement befestigt.
Nach 30 Minuten war der Kasten geschmolzen und nach 2 Stunden wurde an dem Thermoelement eine Temperatur von 700°C gemessen.

**Beispiel 2:**

Auf einem Zweischneckenextruder K 30 der Fa. Werner & Pfleiderer wurde Zylindergranulat aus einer Mischung aus

31,8 % Ethylen-Vinylacetat-Copolymer:Evathane 2825 EVA(Elf Atochem)
21,2% High-density-Polyethylen: PE FT 7245 HDPE (Borealis)
40,0 % Vermikulargraphit (Kaisersberg)
7,0% Ethylendiaminphosphat

mit den Abmessungen 4mm Durchmesser und 4mm Länge hergestellt. Die Extrusionstemperatur betrug 150°C und der Durchsatz lag bei 10 kg/h.
In einem zweiten Verarbeitungsschritt wurde ein Verbindungskasten 100 mit den Abmessungen 107 x 107 x 57 mm auf einer Spritzgussmaschine FM 60 der Fa. Klöckner Ferromatik gespritzt. Die Temperatur in der Aufheizzone betrug 150 - 160 °C und jene in der Form 40 -60 °C. Der Einspritzdruck lag bei 10 bar.
Der Verbindungskasten mit einer mittleren Materialdicke von 2,5 mm wurde mit einem Stahlblechdeckel verschlossen. Diese Anordnung wurde in einer entsprechenden Ytongmauerausnehmung angebracht. Die Seite mit dem Stahlblechdeckel wurde feuerseitig im Brandofen eingebaut.
An der Verbindungskastenrückwand wurde ein Thermoelement zur Temperaturmessung angebracht. Im Verlauf des Brandversuches schäumte der Verbindungskasten vollständig aus. Auf der Rückwand betrug die Temperatur nach 2 Stunden 300°C. Aus einem anderen Verbindungskasten wurden Probekörper hergestellt und die mechanischen Eigenschaften im Zugversuch nach DIN 53 455 und der Expansionsfaktor bei 300°C und 30 Minuten festgestellt. Die Werte sind aus Tabelle 1 ersichtlich. Aus dem gleichen Granulat wurden runde Verbindungsdose mit den Abmessungen 70 mm Durchmesser und 36 mm Höhe gespritzt und ebenfalls in einer 100 mm starken Ytongmauer in einer entsprechenden kreisförmigen Ausnehmung angebracht, mit einem Stahlblechdeckel verschlossen und im Brandofen geprüft. Nach 2 Stunden erreichte die Rückwand eine Temperatur von 320°C.

**Beispiel 3:**

Es wurde eine Pulvermischung aus

45% BMI B 21 Bismaleinimid (DSM Fine Chemicals)
40% Vermikulargraphit (Kaisersberg)
15% Ton 610 (Bischitzky)

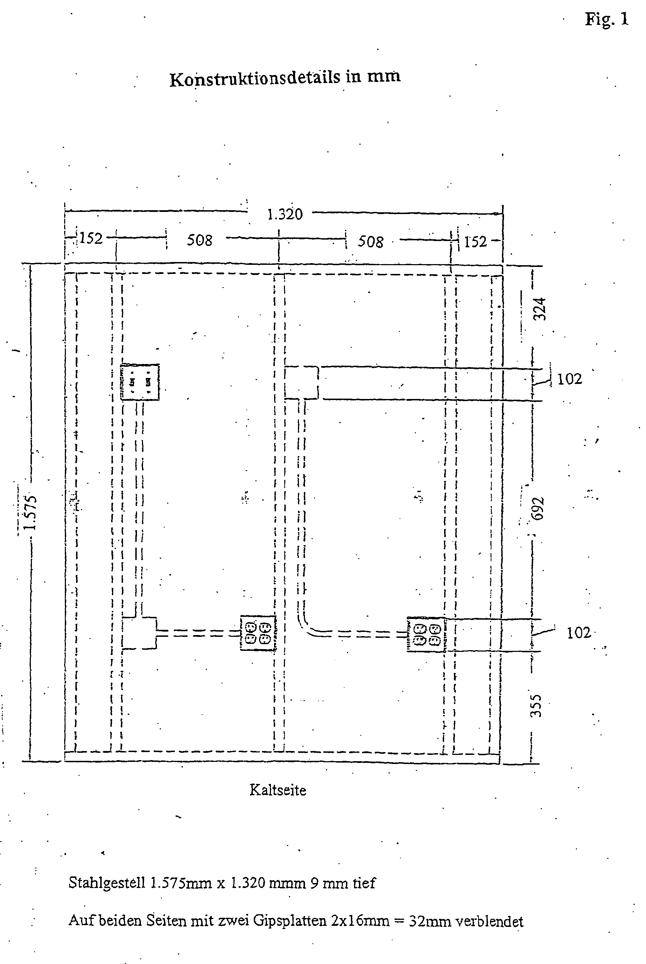

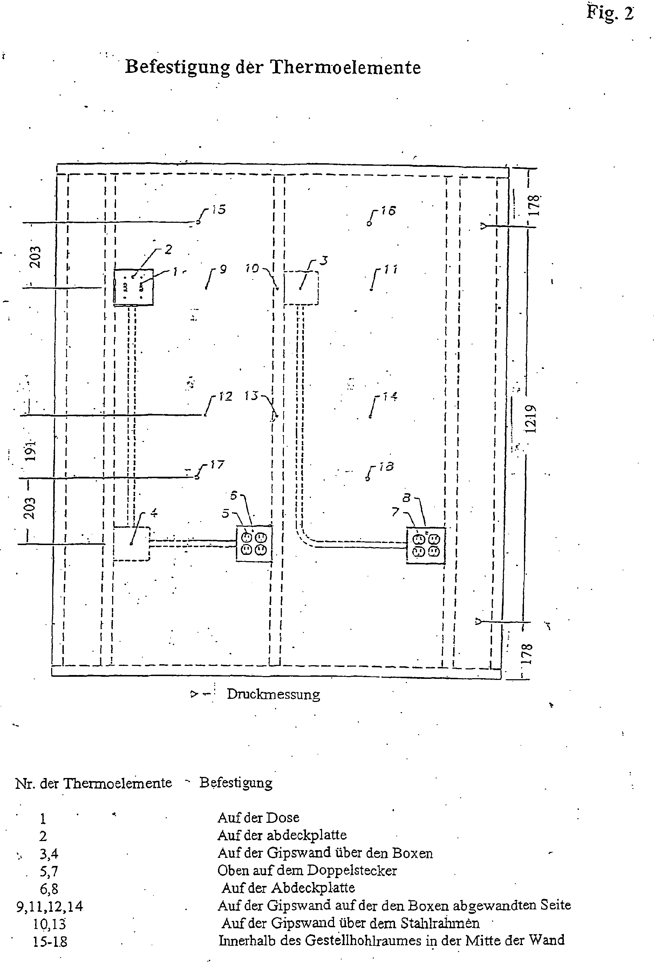

mit einem Schüttgewicht von 35 g/l hergestellt.
Auf einer konventionellen Spritzgußmaschine für warmhärtende Kunststoffe mit einem L/D Verhältnis von 15 und einer kompressionslosen Schnecke mit Steigung 0,8 wurde bei einer Schneckendrehzahl von 40 Upm ein Verbindungskasten gespritzt. Die Temperaturen betrugen in der Einzugszone 50-60°C, in der Kompressionszone 50-60°C, in der Austragszone 100-110°C und im Werkzeug 230°C. Der Spritzdruck lag bei 600 bar.
Die Nachhärtung erfolgte in 8 h bei 200°C.
Die mechanischen Eigenschaften können der Tab. 1 und das Brandverhalten und die Rückwandtemperatur von 280°C der Tab.2 entnommen werden.
Ebenso wurde eine amerikanische Verteilerdose mit den Abmessungen 100x100x50 mm gespritzt, um sie nach UL gemäß dem Aufbau von Fig. 1 und 2 prüfen zu können. Innerhalb von 2 Stunden wurden 180°C nicht überschritten.
Damit das Material nur nach innen intumesziert, wird um die Dose ein Glasgewebeband gelegt.

**Beispiel 4**

Es wurde eine Pulvermischung aus

50% BMI B 21
35% Vermikulargraphit (Kaisersberg)
15% Vetrotex 355 Glasfasern 3 mm (Vetrotex)

hergestellt.
Auf der Spritzgussmaschine des Beispiels 3 wurden unter gleichen Verarbeitungsbedingungen runde Verbindungs dosen und eckige amerikanische Verteilerdosen hergestellt. Die entsprechenden Daten finden sich in Tab.1 und 2.

**Beispiel 5**

Es wurde eine Pulvermischung aus

45% BMI B21
40% Vermikulargraphit
15% Ton nanodispers EXM 784 SÜD-Chemie AG

mit dem Schüttgewicht von 0,4 g/cm3 hergestellt und auf einer Spritzgussmaschine der Fa. Klöckner Ferromatik zu Formkörpern verarbeitet. Die Schneckendrehzahl lag bei 45 Upm, die Temperaturen der Spritzeinheit lagen bei 55°C in der Einzugzone, bei 55°C in der Kompressionszone und bei 110°C in der Austragszone. Die Werkzeugtemperatur betrug 250°C. Es wurden 500 bar Spritzdruck und 500 bar Nachdruck aufgebracht. Die Nachhärtung erfolgte bei 200°C innerhalb von 8 h.
Das Brandverhalten und die mechanischen Eigenschaften von runden und rechteckigen Verbindungskästen sind in den Tabellen 1 und 2 aufgeführt.

**Beispiel 6**

42,1% Copolymer aus Ethylen und Octen: Exact Dextra 2M003 Elastomer (DSM)
42,1% Vermikulargraphit (Kaisersberg)
10,5% Ton 610 (Bischitzky)
5,3% Exolit 422 Ammoniumpolyphosphat (Clariant)

wurden auf einer ZSK 30 zu Granulat verarbeitet. Anschließend wurden auf einer Spritzgußmaschine bei 150°C Temperatur der Einzugzone und 40°C Temperatur der Form bei 15 bar rechteckige Verbindungskästen gespritzt.
Die Wandstärke betrug wieder 2,5 mm. Im Brandversuch der Tab.2 wurde wieder ein völliges Zuschäumen des Kasten beobachtet. Die Rückenwandtemperatur betrug nach 2 Stunden 280°C.

**Beispiel 7**

Aus einer Mischung aus

40 % Copolymer aus Ethylen und Octen: Exact Dextra 0203 Elastomeres (DSM)
40% Vermikulargraphit
10% China Clay
10% Amgard NK Ethylendiaminphosphat (Albright und Wilson)

wurde auf einer ZSK 30 Granulat hergestellt, das anschließend zu runden und eckigen Verteilerkästen verspritzt wurde.

**Beispiel 8:**

Mittels Extrusion wurde ein Granulat mit folgender Zusammensetzung hergestellt:

40 % Ethylen-Polyvinylacetat Mowilith DM 200 EVA (Clariant)

30% Exolit 422 Ammoniumpolyphosphat (Clariant)
15 %Melamin (BASF)
15 %Dipentaerythrit (Perstorp)

Die Extrusionstemperatur betrug 200°C. In einem zweiten Arbeitsschritt wurden bei 190°C runde Verbindungsdosen mit einem Durchmesser von 70 mm und einer Höhe von 35 mm gespritzt.
Diese wurden mit einem Stahlblechdeckel verschlossen und in einer 100 mm starken Ytongwand im Brandofen geprüft. Der Stahlblechdeckel war auf der Kaltseite. Ein Thermoelement zeigte die Temperatur des Deckels an. Nach 2 Stunden wurden 350°C erreicht.

Tabelle 1: Mechanische Eigenschaften

| Beispiel | Zugfestigkeit MPa | Dehnung % | E- Modul MPa | Expansion unter Belastung 550°C/30min (5g/cm2) |
|---|---|---|---|---|
| 2 | 4,5 | 8,0 | 200 | 16 |
| 3 | 50 | 0,5 | 6.000 | 14 |
| 4 | 30 | 0,4 | 7.000 | 15 |
| 5 | 40 | 0,3 | 6.500 | 15 |
| 6 | 3 | 12,0 | 175 | 15 |
| 7 | 5 | 5,5 | 450 | 16 |
| 8 | 4 | 10,0 | 200 | 17 |

Tab.2 Brandverhalten von Verbindungskästen und Verbindungsdosen

| Beispiel | Verbindungskasten/ dose Rückwandtemperatur (°C) | Verbindungskasten/dose Ausschäumungsgrad (%) | UL-Test (min) |
|---|---|---|---|
| 1 | 600/- | 0/- | |
| 2 | 300/320 | 100/100 | |
| 3 | 280/- | 100/ - | > 120 |
| 4 | - /300 | 100/100 | >120 |
| 5 | 290/ - | 100/ - | >120 |
| 6 | 280/ - | 100/ - | |
| 7 | 270/ | 100/ - | |
| 8 | 320/ | 100/ - | |

## Patentansprüche

1. Intumeszierende, elektrische Installationssysteme, **dadurch gekennzeichnet, dass** sie aus einer Spritzgussmasse aus Polyolefinen oder Polyimiden in Kombination mit Intumeszenzadditiven bestehen, wobei die Schmelztemperaturen der Polyolefine und der Polyimide tiefer liegen als die Intumeszenztemperatur der Intumeszenzadditive.

2. Intumeszierende, elektrische Installationssysteme nach Anspruch 1, **dadurch gekennzeichnet, dass** als Polyolefin thermoplastische Polyolefine aus der Gruppe Polyethylen mit niedriger Dichte bis hoher Dichte, Ethylen-Vinylacetat- Copolymere, Ethylen-Butylacrylat-Copolymere, Polypropylen, Polybuten-1, Poly(methylpenten), Copolymere aus Ethylen und Octen, Ethylen/Propylen-Dien-Terpolymere oder Gemische derselben eingesetzt werden.

3. Intumeszierende, elektrische Installationssysteme nach Anspruch 1, **dadurch gekennzeichnet, dass** solche Polyimide eingesetzt werden, die als tiefschmelzende Precursor vorliegen und bei Temperatureinwirkung durch Additionsreaktionen hochvernetzte Produkte bilden.

4. Intumeszierende, elektrische Installationssysteme nach Anspruch 1, **dadurch gekennzeichnet, dass** als Intumes- zenzadditive Ammoniumpolyphosphat, Ammoniumdihydrogenphosphat, Ethylendiaminphosphat, Ammoniumpen- taborat, Melamin, Dicyandiamid, vollständige Phosphorsäureester mit Polyolen, Dipentaerythrit, Pentaerythrit, Zucker, Dextran, Stärke, Vermikulargraphit, Wasserglas, Blähglimmer, Vermiculit, Perlit und deren Mischungen eingesetzt werden.

**5.** Intumeszierende, elektrische Installationssysteme nach Anspruch 1, **dadurch gekennzeichnet, dass** die Spritzgussmasse anorganische Füllstoffe aus der Gruppe etwa Kaolin, Tone, Glimmer, Wollastonit, Kalziumsilikate, Titandioxyd, Zinkborat, Quarz, Zinkoxid, Apatit, Talkum, Aluminiumphosphate, ATH, Mg(OH)$_2$, Kreide, Glasfasern oder Mineralfasern enthält.

**6.** Intumeszierende, elektrische Installationssysteme nach Anspruch 5, **dadurch gekennzeichnet, dass** als anorganischer Füllstoff Tone oder Glimmer eingesetzt werden, die in der Mischung aus Polymer, Intumeszenzadditiv und Füllstoff als Nanopartikel vorliegen.

**7.** Intumeszierende, elektrische Installationssysteme nach Anspruch 1, **dadurch gekennzeichnet, dass** die Spritzgussmasse Dispergatoren aus der Gruppe Zink-oder Kalziumstearat, Glycerinstearat, Pentaerythrittetrastearat, Cetylpalmitat, Ethylendistearoyldiamid C$_{14}$-C$_{18}$-Fettalkohole, Dicarbonsäureester, Fettamine oder Paraffine enthält.

**8.** Intumeszierende, elektrische Installationssysteme nach Anspruch 1, **dadurch gekennzeichnet, dass** die Materialdicke so bemessen wird, dass sie dem Volumen des Installationssystem, dividiert durch das Produkt aus doppelter Mantelfläche und maximalem Expansionsfaktor entspricht, sodass das Installationssystem durch Intumeszenz vollständig ausgeschäumt wird und ein Kompressionsfaktor von 2 vorliegt.


**Claims**

**1.** Intumescent, electrical installation systems, **characterized in that** they comprise an injection molding material of polyolefins or polyimides in combination with intumescent additives, the melting points of the polyolefins and of the polyimides being lower than the intumescence temperature of the intumescent additives.

**2.** Intumescent, electrical installation systems according to Claim 1, **characterized in that** thermoplastic polyolefins from the group consisting of polyethylene having a low density to high density, ethylene-vinyl acetate copolymers, ethylene-butyl acrylate copolymers, polypropylene, poly-1-butene, poly(methylpentene), copolymers of ethylene and octene, ethylene/propylene-diene terpolymers or mixtures thereof are used as the polyolefin.

**3.** Intumescent, electrical installation systems according to Claim 1, **characterized in that** the polyimides used are those which are present as a low-melting precursor and form highly crosslinked products by addition reactions under the action of heat.

**4.** Intumescent, electrical installation systems according to Claim 1, **characterized in that** ammonium polyphosphate, ammonium dihydrogen phosphate, ethylenediamine phosphate, ammonium pentaborate, melamine, dicyandiamide, full phosphoric esters with polyols, dipentaerythritol, pentaerythritol, sugar, dextran, starch, vermicular graphite, waterglass, expanded mica, vermiculite, perlite and mixtures thereof are used as intumescent additives.

**5.** Intumescent, electrical installation systems according to Claim 1, **characterized in that** the injection molding material contains inorganic fillers from the group consisting of, for example, kaolin, clays, mica, wollastonite, calcium silicates, titanium dioxide, zinc borate, quartz, zinc oxide, apatite, talc, aluminum phosphates, ATH, Mg(OH)$_2$, chalk, glass fibers or mineral fibers.

**6.** Intumescent, electrical installation systems according to Claim 5, **characterized in that** clays or micas which are present as nanoparticles in the mixture of polymer, intumescent additive and filler are used as the inorganic filler.

**7.** Intumescent, electrical installation systems according to Claim 1, **characterized in that** the injection molding material contains dispersants from the group consisting of zinc stearate or calcium stearate, glyceryl stearate, pentaerythrityl tetrastearate, cetyl palmitate, ethylenedistearoyldiamide C$_{14}$-C$_{18}$ fatty alcohols, dicarboxylic esters, fatty amines or paraffins.

**8.** Intumescent, electrical installation systems according to Claim 1, **characterized in that** the material thickness is such that it corresponds to the volume of the installation system divided by the product of twice the lateral surface area and the maximum expansion factor, so that the installation system is completely filled with foam by intumescence and a compression factor of 2 is present.

**Revendications**

1. Systèmes d'installation électriques intumescents, **caractérisés en ce qu'**ils sont constitués d'une matière de moulage par injection composée de polyoléfines ou de polyimides en combinaison avec des additifs intumescents, dans lesquels les températures de fusion des polyoléfines et des polyimides sont plus basses que la température d'intumescence des additifs intumescents.

2. Systèmes d'installation électriques intumescents selon la revendication 1, **caractérisés en ce que** sont utilisées, en tant que polyoléfine, des polyoléfines thermoplastiques issues du groupe comprenant le polyéthylène de basse à haute densité, des copolymères éthylène-acétate de vinyle, des copolymères d'éthylène et d'acrylate de butyle, le polypropylène, le polybutène-1, le (poly)méthylpentène, des copolymères composés d'éthylène et d'octène, des terpolymères éthylène-propylène-diène ou des mélanges de ces derniers.

3. Systèmes d'installation électriques intumescents selon la revendication 1, **caractérisés en ce que** sont utilisés des polyimides tels qu'ils sont présents sous la forme de précurseurs à bas point de fusion et qu'ils forment, sous l'effet des températures, des produits fortement réticulés du fait de réactions d'addition.

4. Systèmes d'installation électriques intumescents selon la revendication 1, **caractérisés en ce que** sont utilisés, en tant qu'additifs intumescents, du polyphosphate d'ammonium, du dihydrogénophosphate d'ammonium, de l'éthylènediaminephosphate, du pentaborate d'ammonium, de la mélamine, du dicyandiamide, des esters d'acide phosphorique complets comprenant des polyols, du dipentaérythritol, du pentaérythritol, du sucre, du dextrane, de l'amidon, du graphite vermiculaire, du verre soluble, du mica expansé, de la vermiculite, de la perlite et leurs mélanges.

5. Systèmes d'installation électriques intumescents selon la revendication 1, **caractérisés en ce que** la matière de moulage par injection contient des charges inorganiques issues du groupe comprenant par exemple du kaolin, de l'argile, du mica, de la wollastonite, des silicates de calcium, du dioxyde de titane, du borate de zinc, du quartz, de l'oxyde de zinc, de l'apatite, du talc, des phosphates d'aluminium, de l'ATH, du $Mg(OH)_2$, de la craie, des fibres de verre ou des fibres minérales.

6. Systèmes d'installation électriques intumescents selon la revendication 5, **caractérisés en ce qu'**est utilisé(e), en tant que charge inorganique, de l'argile ou du mica, lesquels sont présents dans le mélange composé de polymère, d'un additif intumescent et d'une charge sous la forme de nanoparticules.

7. Systèmes d'installation électriques intumescents selon la revendication 1, **caractérisés en ce que** la matière de moulage par injection contient des agents dispersants issus du groupe comprenant le stéarate de zinc ou de calcium, le stéarate de glycérine, le tristéarate de pentaérythritol, le palmitate de cétyle, le distéaroyldiamide d'éthylène, les alcools gras en $C_{14}$-$C_{18}$, l'ester d'acide dicarboxylique, les amines grasses ou les paraffines.

8. Systèmes d'installation électriques intumescents selon la revendication 1, **caractérisés en ce que** l'épaisseur de matériau présente des dimensions telles qu'elle correspond au volume du système d'installation, divisé par le produit du double de la surface extérieure et du facteur d'expansion maximal, de sorte que le système d'installation soit totalement soumis à un moussage du fait de l'intumescence et qu'un facteur de compresseur de 2 soit présent.

Fig. 1

Konstruktionsdetails in mm

Kaltseite

Stahlgestell 1.575mm x 1.320 mmm 9 mm tief

Auf beiden Seiten mit zwei Gipsplatten 2x16mm = 32mm verblendet

Fig. 2

## Befestigung der Thermoelemente

⊳ ─ Druckmessung

Nr. der Thermoelemente    Befestigung

| | |
|---|---|
| 1 | Auf der Dose |
| 2 | Auf der abdeckplatte |
| 3,4 | Auf der Gipswand über den Boxen |
| 5,7 | Oben auf dem Doppelstecker |
| 6,8 | Auf der Abdeckplatte |
| 9,11,12,14 | Auf der Gipswand auf der den Boxen abgewandten Seite |
| 10,13 | Auf der Gipswand über dem Stahlrahmen |
| 15-18 | Innerhalb des Gestellhohlraumes in der Mitte der Wand |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2186123 A

- DE 4234374 A1